# EUROPÄISCHE PATENTSCHRIFT

(11) **EP 1 178 907 B1**
(45) Veröffentlichungstag und Bekanntmachung des Hinweises auf die Patenterteilung: **26.04.2006**
(21) Anmeldenummer: 00983336.9
(22) Anmeldetag: 15.12.2000
(51) Int. Cl.: B60S 1/38, B60S 1/52

(54) **WISCHBLATT ZUM REINIGEN VON SCHEIBEN AN FAHRZEUGEN, INSBESONDERE KRAFTFAHRZEUGEN**
WIPER BLADE FOR CLEANING GLASS SURFACES ON VEHICLES, ESPECIALLY MOTOR VEHICLES
RACLETTE D'ESSUIE-GLACE POUR VEHICULES, EN PARTICULIER DES VEHICULES AUTOMOBILES

(30) Priorität: 07.01.2000 DE 10000381
(43) Veröffentlichungstag der Anmeldung: 13.02.2002
(73) Patentinhaber: Valeo Wischersysteme GmbH, 74321 Bietigheim-Bissingen (DE)
(72) Erfinder: EGNER-WALTER, Bruno, 74076 Heilbronn (DE)
(74) Vertreter: Jahn, Wolf-Diethart
(86) Internationale Anmeldenummer: PCT/EP2000/012768
(87) Internationale Veröffentlichungsnummer: WO 2001/051323

(56) Entgegenhaltungen:
- DE-A- 19 729 864
- FR-A- 2 679 185
- FR-A- 2 725 676
- FR-A- 2 747 977
- GB-A- 1 447 724
- US-A- 3 088 155

## Beschreibung

Die Erfindung bezieht sich auf ein Wischblatt gemäß Oberbegriff des Patentanspruchs 1. Ein Wischblatt mit diesen Merkmalen ist z.B. aus US-A-3 088 155 bekannt.

Wischblätter zum Reinigen von Scheiben an Kraftfahrzeugen sind in unterschiedlichsten Ausführungen bekannt. Bekannt sind dabei speziell auch sogenannte Flachbau-Wischblätter, die im wesentlichen aus einer aus gummielastischem Material gefertigten Wischleiste und aus in seitliche Längsnuten der Wischleiste eingreifenden Trag- oder Federschienen bestehen, die dann an beiden Enden der Wischleiste mit dieser über Abschlußstücke zu dem Wischblatt verbunden sind (DE-A-197 39 256).

Bekannt ist bei Wischblättern auch, die Wischleiste an ihrer der Wischlippe und damit der zu reinigenden Scheibe abgewandten Oberseite als Spoiler, d.h. mit einer Schrägfläche, deren Ebene im Verwendungsfall mit der Ebene der Scheibe einen Winkel kleiner als 90° einschließt, oder mit einer entsprechenden konkav gewölbten Schräge auszubilden (DE-A 197 34 843).

Bekannt ist weiterhin, bei Wischblättern innerhalb der Wischleiste einen sich in Wischblattlängsrichtung erstreckenden Verteilerkanal für eine Reinigungs- oder Waschflüssigkeit vorzusehen, wobei zum Austritt der Reinigungs- oder Waschflüssigkeit auf die Scheibe an beidendig am Wischblatt vorgesehenen Abschlußstücken Austrittsöffnungen vorgesehen sind.

Nachteilig bei bekannten Wischblättern der eingangs erwähnten Art ist u.a., dass die vorstehenden Bereiche oder Teile der Feder- oder Tragschienen relativ scharfe Kanten mit einem erheblichen Verletzungsrisiko bilden. Weiterhin wirken sich diese überstehenden Teile insbesondere auch strömungstechnisch negativ auf das Verhalten des Wischblatts und damit des Scheibenwischers bei hohen Fahrgeschwindigkeiten aus. In den Fällen, in denen auf den vorstehenden Bereichen oder Teilen der Feder- oder Tragschienen Abdeckungen angebracht sind (z.B. US-A-3 088 155), ist die aus gummielastischem Material gefertigte Wischleiste oder die Abdeckung nicht geeignet, Waschflüssigkeit auf die zu reinigende Scheibe abzugeben.

Aufgabe der Erfindung ist es, ein Wischblatt aufzuzeigen, welches diese Nachteile vermeidet. Zur Lösung dieser Aufgabe ist ein Wischblatt entsprechend dem Patentanspruch 1 ausgebildet.

Durch das Abdeckprofil bzw. die Abdeckleiste ist der aus der Wischleiste vorstehende Teil der Breite der jeweiligen Trag-oder Federschiene abgedeckt, so daß die Gefahr von Verletzungen nicht mehr besteht. Das Abdeckprofil kann insbesondere an seinen freiliegenden Flächen auch strömungstechnisch optimal gestaltet werden, so daß sich für das mit den wenigstens einen Abdeckprofil versehene Wischblatt optimale Eigenschaften selbst bei hoher Fahrgeschwindigkeit ergeben. Außerdem ist in dem wenigstens einen Abdeckprofil zumindest ein sich in Wischblattlängsrichtung erstreckender Kanal für eine Reinigungs- oder Waschflüssigkeit vorgesehen. Dieser mindestens eine Kanal ermöglicht das Verteilen und Ausbringen einer Reinigungs- oder Waschflüssigkeit auf die zu reinigende Fahrzeugscheibe. Ein weiterer Vorteil dieses mindestens einen Kanals besteht in einer Verringerung des Gewichtes des Abdeckprofils.

Bei der Erfindung ist zumindest auf der in Fahrtrichtung vorderen Seite des Wischblatts ein derartiges Abdeckprofil vorgesehen. Das Abdeckprofil kann in besonders vorteilhafter Weise aus Kunststoff, beispielsweise auch aus weicheren oder elastischen Kunststoff hergestellt werden, und zwar z.B. als extrudiertes Profil, welches dann auf die jeweils benötigte Länge zugeschnitten wird.

Bei einer Ausführungsform der Erfindung ist das im Verwendungsfall bezogen auf die Fahrtrichtung vordere Abdeckprofil zumindest an einer Teilfläche als Spoiler ausgebildet, was ebenfalls dazu beiträgt, das Verhalten des Wischblatts bei hohen Geschwindigkeiten zu verbessern.

Weiterhin besteht die Möglichkeit, wenigstens eine in einen in dem Abdeckprofil vorgesehenen Verteilerkanal mündende Düsenöffnung zum Ausbringen der Reinigungs- oder Waschflüssigkeit vorzusehen.

Weiterbildungen der Erfindung sind Gegenstand der Unteransprüche.

Die Erfindung wird im Folgenden anhand der Figuren an Ausführungsbeispielen näher erläutert. Es zeigen:
- Fig. 1: in vereinfachter Darstellung einen Schnitt durch ein Wischblatt eines ansonsten nicht weiter dargestellten Scheibenwischers;
- Fig. 2: in Teildarstellung den Scheibenwischer in Seitenansicht;
- Fig. 3: in vereinfachter Teildarstellung einen Schnitt durch ein Wischblatt einer weiteren möglichen Ausführungsform der Erfindung.

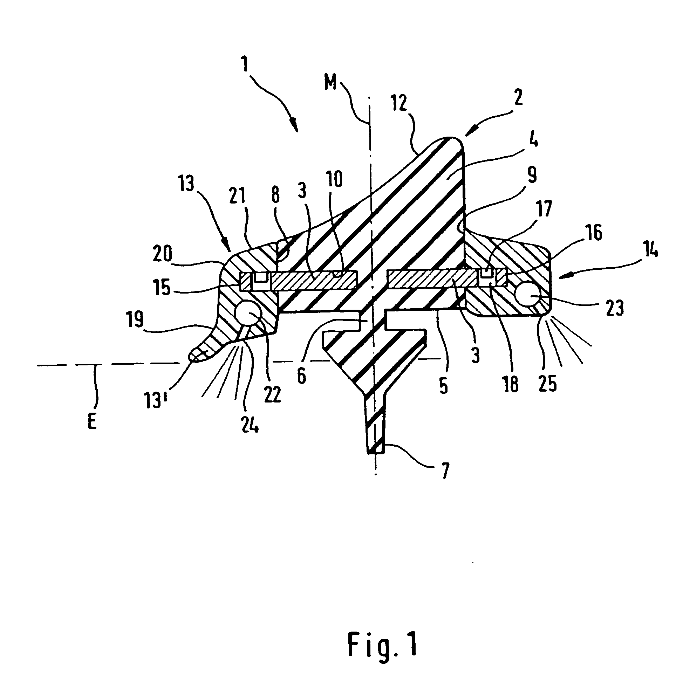

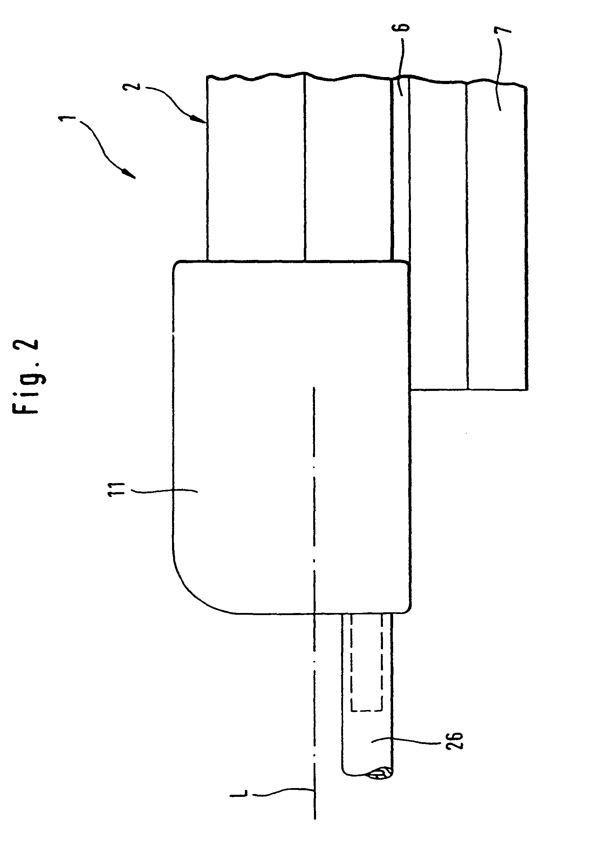

Das in den Figuren 1 und 2 dargestellte Wischblatt 1 besteht in an sich bekannter Weise aus einer Wischleiste 2, die als Profil aus einem gummielastischen Material hergestellt ist, sowie aus zwei die Wischleiste 2 zwischen sich aufnehmenden, flachbandartigen Trag- oder Federschienen 3, die aus einem elastischen Material, vorzugsweise aus Federstahl hergestellt sind und sich ebenso wie die Wischleiste 2 über die gesamte Länge des Wischblatts 1 erstrecken, die bei der für die Figur 1 gewählten Darstellung senkrecht zur Zeichenebene dieser Figur verläuft.

Das Profil der Wischleiste 2 bildet einen Profilabschnitt 4 mit einer Unterseite 5, an der über einen Kippsteg 6 die ebenfalls angeformte Wischlippe 7 vorgesehen ist, mit der das Wischblatt 1 im Verwendungsfall gegen die zu reinigende Scheibe eines Fahrzeugs anliegt. Kippsteg 6 und Wischlippe 7 erstrecken sich ebenfalls über die gesamte Länge der Wischleiste 2. Bei der dargestellten Ausführungsform ist der Kippsteg 6 etwa in der Mitte der Unterseite 5 angeformt, und zwar in einer die Längsachse L des Wischblatts 1 einschließenden Mittelebene M. An zwei, bei der dargestellten Ausführungsform in Ebenen senkrecht zur Unterseite 5 liegenden Längsseiten 8 und 9 ist der Profilabschnitt 4 mit jeweils einer Längsnut 10 versehen. Diese sind an den Längsseiten 8 und 9 sowie an den beiden Enden der Wischleiste 2 offen und liegen in einer gemeinsamen Ebene parallel zur Unterseite 5.

In jeder Längsnut 10 ist jeweils eine Federschiene 3 mit einem Teil ihrer Breite aufgenommen, die mit dem anderen Teil ihrer Breite, d.h. bei der dargestellten Ausführung etwa mit der halben Breite aus der Längsnut 10 über die betreffende Längsseite 8 bzw. 9 vorsteht. In der Mitte des Wischblatts 1 ist dieses über einen nicht dargestellten Adapter, der auch an den Federschienen 3 angreift, an dem ebenfalls nicht dargestellten Wischarm des Scheibenwischers befestigt. Weiterhin sind an den beiden Enden des Wischblatts Abschlußstücke 11 befestigt, die dort die Enden der Federschienen 3 miteinander sowie mit der Wischleiste 2 verbinden.

Wie die Figur 1 auch zeigt, ist der Profilabschnitt 4 an der der Wischlippe 7 abgewandten Oberseite des Wischblatts als Spoiler ausgebildet, d.h. die eine Längsseite 9 besitzt eine größere Höhe als die andere Längsseite 8, so daß sich an der Oberseite der Wischleiste 2 eine schräg verlaufende Spoilerfläche 12 ergibt, die um Achsen parallel zur Längserstreckung oder -achse L der Wischleiste 2 konkav gewölbt ist.

An den über die Längsseiten 8 und 9 vorstehenden Teilen der Trag- oder Federschienen 3 sind Abdeckprofile 13 bzw. 14 aufgesetzt, die bei der dargestellten Ausführungsform diese vorstehenden Bereiche der Tragschienen 3 auf der gesamten Länge abdecken, d.h. bis an die beiden Abschußstücke 11 reichen. Die Abdeckprofile 13 und 14, die vorzugsweise aus Kunststoff gefertigt sind, umgreifen die vorstehenden Bereiche der Trag- oder Federschienen 3 klammerartig, so daß diese Bereiche vollständig abgedeckt sind. Die Abdeckprofile 13 und 14 besitzen hierfür jeweils eine Längsnut 15 bzw. 16, die zu einer Längsseite des jeweiligen Abdeckprofils 13 bzw. 14 sowie auch zu den beiden Enden dieses Profils hin offen ist und in der der jeweils vorstehende Teil der Trag- oder Federschiene 3 aufgenommen ist.

In den Längsnuten 15 bzw. 16 sind Rasten vorgesehen, die bei der dargestellten Ausführungsform von Vorsprüngen 17 gebildet sind, welche mit Gegenrasten an den Trag- oder Federschienen 3 zusammenwirken. Diese Gegenrasten sind bei der dargestellten Ausführungsform von Öffnungen 18 gebildet, die die Trag- oder Federschienen 3 zumindest an ihrem aus der Wischleiste 2 vorstehenden Teilbereich aufweisen. Mit den in die Öffnungen 18 eingreifenden Vorsprüngen 17 sind die Abdeckprofile 13 und 14 durch Einrasten am Wischblatt 1 gehalten. Bei der dargestellten Ausführungsform ist das der Längsseite 8 benachbarte Abdeckprofil 13 so geformt, daß es an seiner, der Wischleiste 2 abgewandten außenliegenden Seite einen weiteren Spoiler mit einer Spoilerfläche 19 bildet, die ebenfalls um parallel zur Längsachse L verlaufende Achsen konkav gekrümmt ist, wobei sich in der Querschnittsdarstellung der Figur 1 an die Spoilerfläche 19 eine konvex gekrümmte Fläche 20 anschließt, die dann über eine weitere Fläche 21 in die Spoilerfläche 20 übergeht.

Wie die Figur 1 auch zeigt, bildet die Fläche 21 eine Verbreiterung der Spoilerfläche 12, so daß durch das Abdeckprofil 13 einerseits die Spoilerfläche 12 vergrößert und andererseits ein zusätzlicher Spoiler bzw. eine zusätzliche Spoilerfläche 19 geschaffen ist. Die Spoilerfläche 19 ist zumindest teilweise an einem Vorsprung 13' des Abdeckprofils 13 gebildet, der (Vorsprung) über die Unterseite 5 des Profilabschnittes 4 vorsteht.

Bei der dargestellten Ausführungsform ist in jedem Abdeckprofil 13 bzw. 14 jeweils ein Kanal 22 bzw. 23 vorgesehen, der sich in Längsrichtung des Abdeckprofils 13 bzw. 14 erstreckt. Die Kanäle 22 und 23 dienen einerseits dazu, das Gewicht des jeweiligen Abdeckprofils zu reduzieren. Weiterhin dienen die Kanäle 22 und 23 insbesondere auch zum Verteilen und Ausbringen einer Reinigungs- oder Waschflüssigkeit auf die zu reinigende Fahrzeugscheibe. Hierfür sind an den Abdeckprofilen 13 und 14 in den jeweiligen Kanal 22 bzw. 23 mündende Düsenöffnungen 24 bzw. 25 vorgesehen, und zwar an der der Fahrzeugscheibe bzw. Wischlippe 7 zugewandten Unterseite des Abdeckprofils derart, daß die Düsenöffnungen 24 bzw. 25 mit ihrer Achse einen spitzen Winkel, d.h. einen Winkel kleiner als 90° mit der Mittelebene M einschließen und radial oder in etwa radial zur Längserstreckung des jeweiligen Kanals 22 bzw. 23 angeordnet sind. Die Düsenöffnungen 24 sind dabei durch den Vorsprung 13' gegenüber dem Fahrtwind geschützt oder abgedeckt vorgesehen. Zum Zuführen des Waschmittels ist ein Abschlußstück 11 als Anschlußstück mit einem internen Kanal ausgebildet, der mit den Kanälen 22 und 23 sowie über einen Schlauch 26 mit einer Quelle für das flüssige Waschmittel (Wasser, vorzugsweise Wasser mit Reinigungs- und Frostschutzzusätzen) verbunden ist. Das andere Abschlußstück 11 ist dann beispielsweise so ausgebildet, daß es die beiden Kanäle 22 und 23 an dem betreffenden Ende verschließt. Wie die Figur 2 zeigt, sind durch die Unterbringung der Kanäle 22 und 23 auch die entsprechenden Austrittsöffnungen 24 und 25 mit einem relativ großen Abstand von der Mittelebene M und damit von der Wischlippe 7 angeordnet, so daß sich für die auf die Scheibe ausgebrachte Reinigungs- oder Wischflüssigkeit eine hohe Einwirkzeit ergibt.

Als Material für die Abdeckprofile 13, 14 eignen sich Kunststoff oder auch ein gummielastisches Material, beispielsweise elastischer Kunststoff. Das Abdeckprofil 13 ist bei der dargestellten Ausführungsform an derjenigen Seite des Wischblatts 1 vorgesehen, die im Verwendungsfall bezogen auf die Fahrrichtung des Fahrzeugs die vordere Seite bildet.

Über die beiden Kanäle 22 und 23 und die zugehörigen Austrittsöffnungen 24 und 25 kann die Reinigungs- oder Waschflüssigkeit entweder gleichzeitig ausgebracht werden, oder aber es besteht auch die Möglichkeit, bei eingeschaltetem Scheibenwischer dieses Ausbringen in Abhängigkeit von der Bewegungsrichtung des Wischblatts derart zu steuern, daß das Ausbringen der Reinigungs- oder Waschflüssigkeit stets über denjenigen Kanal 22 bzw. 23 bzw. diejenigen Austrittsöffnungen 24 und 25 erfolgt, die bezogen auf die Bewegung des Wischblatts 1 der Wischlippe 7 vorauseilen.

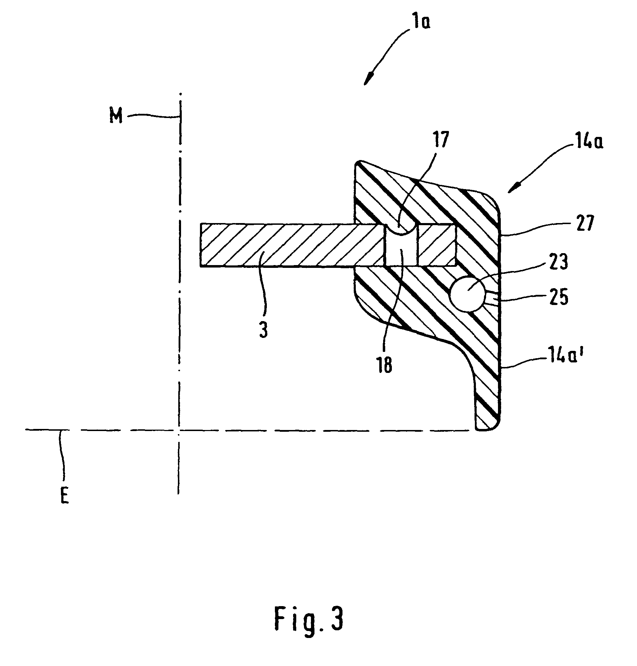

Die Figur 3 zeigt als weitere mögliche Ausführungsform ein Wischblatt 1a, von dem allerdings der einfacheren Darstellung wegen nur die rechts von der Mittelebene M liegende Federschiene 3 zusammen mit einem Abdeckprofil 14a dargestellt ist, welches dem Abdeckprofil 14 des Wischblatts 1 entspricht, allerdings eine vom Abdeckprofil 14 etwas abweichende Formgebung aufweist. Ansonsten ist das Wischblatt la insbesondere auch hinsichtlich der Wischleiste 2, der Tragschienen 3 und des Abdeckprofils 13 in gleicher Weise ausgebildet, wie dies vorstehend für das Wischblatt 1 beschrieben wurde.

Wie dargestellt, ist das Abdeckprofil 14a im Bereich seiner, die betreffende Längsseite des Wischblatts bildenden, der Wischleiste 2 abgewandten Außenseite 27 mit einer leistenartigen Blende 14a' versehen, die in ähnlicher Weise wie der Vorsprung 13' des Abdeckprofils 13 mit ihrem freien Rand deutlich über die der Wischlippe 7 zugewandte Unterseite des restlichen Teils des Abdeckprofils 14a vorsteht, und zwar beispielsweise bis zu einer Ebene E, die senkrecht zur Mittelebene M liegt, die Wischlippe 7 unterhalb des Kippsteges 6 schneidet und an der oder in deren Nähe sich beispielsweise auch der freie Rand des Vorsprung 13' befindet. Bei der dargestellten Ausführungsform bildet die der Wischlippe 7 abgewandte Außenseite der Blende 14a' die Fortsetzung der Außenseite 27. Die Blende 14a' erstreckt sich über die gesamte Länge des Abdeckprofils 14a bzw. über die gesamte oder nahezu gesamte Länge des Wischblatts 1a.

Das Abdeckprofil 14a weist wiederum den Kanal 23 mit den Düsenöffnungen 25 auf, die allerdings bei dieser Ausführung einen Winkel mit der Mittelebene M einschließen, der im Vergleich zu dem entsprechenden Winkel der Düsenöffnungen 25 des Wischblatts 1 größer ist.

Durch die Blende 14a ergibt sich eine besonders günstige Änderung der Luftströmung u.a. in der Weise, daß insbesondere auch am oberen Wendepunkt der Bewegung des Wischblatts, d.h. in der Nähe der A-Säule eines Fahrzeugs verhindert wird, daß beim Abwärtswischen bzw. bei der Abwärtsbewegung, bei der die die Blende 14a aufweisende Längsseite des Wischblatts 1a dann nacheilt, dasjenige Wasser wieder dem Wischblatt 1a nachläuft und dadurch die Sicht verschlechtert, welches bei der Aufwärtsbewegung durch das Wischblatt von der Fahrzeugscheibe weggewischt wurde.

### Bezugszeichenliste

- 1: Wischblatt
- 2: Wischleiste
- 3: Trag- oder Federschiene
- 4: Profilabschnitt
- 5: Unterseite des Profilabschnitts
- 6: Kippsteg
- 7: Wischlippe
- 8, 9: Wischleisten-Längsseite
- 10: Längsnut
- 11: Abschlußstück
- 12: Spoilerfläche
- 13, 14, 14a: Abdeckprofil
- 13': Vorsprung
- 14a': Blende
- 15, 16: Längsnut
- 17: Vorsprung
- 18: Öffnung
- 19: zusätzliche Spoilerfläche
- 20, 21: Flächenabschnitt
- 22, 23: Kanal
- 24, 25: Düsenöffnung
- 26: Schlauchverbindung
- 27: Längsseite

- L: Längsachse
- M: Mittelebene
- E: Ebene

## Patentansprüche

1. Wischblatt zum Reinigen von Scheiben an Fahrzeugen, insbesondere Kraftfahrzeugen, mit einer an der jeweiligen Scheibe anlegbaren, langgestreckten Wischleiste (2), die aus einem gummielastischen Material besteht und an ihren beiden Längsseiten mit einander gegenüberliegenden Längsnuten (10) versehen ist, in die jeweils eine sich in Längsrichtung (L) der Wischleiste (2) erstreckende, vorzugsweise federnde Tragschiene (3) mit einem Teil ihrer Breite eingreift, wobei jede Tragschiene (3) mit einem weiteren Teil ihrer Breite über die betreffende Längsseite (8, 9) übersteht, wobei auf dem überstehenden Teil wenigstens einer Tragschiene (3) ein diese Tragschiene (3) abdeckendes Abdeckprofil (13, 14, 14a) aufgesetzt und befestigt ist, **dadurch gekennzeichnet, daß** in wenigstens einem Abdeckprofil (13, 14, 14a) wenigstens ein sich in Wischblattlängsrichtung (L) erstreckender Kanal (22, 23) für eine Reinigungs- oder Waschflüssigkeit vorgesehen ist.

2. Wischblatt nach Anspruch 1, **dadurch gekennzeichnet, daß** das wenigstens eine Abdeckprofil (13) an einer bezogen auf die Fahrtrichtung eines Fahrzeugs vorderen Seite des Wischblatts (1, 1a) vorgesehen ist.

3. Wischblatt nach Anspruch 1 oder 2, **dadurch gekennzeichnet, daß** auf die überstehenden Teile beider Tragschienen (10) jeweils ein Abdeckprofil (13, 14, 14a) aufgesetzt ist.

4. Wischblatt nach einem der vorhergehenden Ansprüche, **dadurch gekennzeichnet, daß** das Abdeckprofil (13, 14, 14a) den überstehenden Teil der jeweiligen Tragschiene (3) auf der gesamten Länge abdeckt.

5. Wischblatt nach einem der vorhergehenden Ansprüche,
**dadurch gekennzeichnet, daß** das wenigstens eine Abdeckprofil (13, 14, 14a) dicht an die benachbarte Längsseite (8, 9) der Wischleiste (2) anschließt.

6. Wischblatt nach einem der vorhergehenden Ansprüche, **dadurch gekennzeichnet, daß** das wenigstens eine Abdeckprofil (13) durch Einrasten (17, 18) an der zugehörigen Tragschiene (3) gehalten ist.

7. Wischblatt nach einem der vorhergehenden Ansprüche, **dadurch gekennzeichnet, daß** das wenigstens eine Abdeckprofil (13, 14, 14a) eine Längsnut (15, 16) aufweist, mit der es auf dem überstehenden Teil der wenigstens einen Tragschiene (3) diese klammerartig übergreifend aufgesetzt ist.

8. Wischblatt nach Anspruch 7, **dadurch gekennzeichnet, daß** in der Längsnut (15, 16) wenigstens ein Rastelement (17) vorgesehen ist, welches mit einer Gegenrast (18) an der jeweiligen Tragschiene (3) zusammenwirkt.

9. Wischblatt nach einem der vorhergehenden Ansprüche, **dadurch gekennzeichnet, dass** in den Kanal (22, 23) wenigstens eine Düsenöffnung (24, 25) zum Ausbringen der Reinigungs- oder Waschflüssigkeit auf eine Scheibe mündet.

10. Wischblatt nach einem der vorhergehenden Ansprüche,
**gekennzeichnet durch** wenigstens einen Anschluß (11) zum Anschließen des Kanals (22, 23) an eine Quelle für die Reinigungs- oder Waschflüssigkeit.

11. Wischblatt nach einem der vorhergehenden Ansprüche,
**dadurch gekennzeichnet, daß** das wenigstens eine Abdeckprofil (13, 14a) einen leistenartigen Vorsprung (13') oder eine leistenartige Blende (14a') aufweist, der bzw. die über die Unterseite des restlichen Teils des Abdeckprofils (13, 14a) vorsteht.

12. Wischblatt nach einem der vorhergehenden Ansprüche,
**dadurch gekennzeichnet, daß** das wenigstens eine Abdeckprofil (13), vorzugsweise das Abdeckprofil (13) an der bezogen auf die Fahrtrichtung eines Fahrzeugs vorderen Seite des Wischblatts (1, 1a) an einer sich in Wischblattlängsrichtung (L) erstreckenden Außenfläche als Spoiler ausgebildet bzw. mit einer ersten Spoilerfläche (19) versehen ist.

13. Wischblatt nach Anspruch 12, **dadurch gekennzeichnet, daß** das wenigstens eine Abdeckprofil (13) an seinem Vorsprung (13') mit einer ersten Spoilerfläche (19) versehen ist.

14. Wischblatt nach einem der vorhergehenden Ansprüche, **dadurch gekennzeichnet, daß** die Wischleiste (2) an einer Oberseite als Spoiler ausgebildet bzw. mit einer zweiten Spoilerfläche (12) versehen ist.

15. Wischblatt nach einem der vorhergehenden Ansprüche,
**dadurch gekennzeichnet, daß** wenigstens ein Abdeckprofil (13) eine Fläche (21) aufweist, die sich an die zweite Spoilerfläche (12) anschließt und damit eine Verbreiterung der zweiten Spoilerfläche (12) bewirkt.

16. Wischblatt nach einem der vorhergehenden Ansprüche,
**dadurch gekennzeichnet, daß** das wenigstens eine Abdeckprofil (13, 14, 14a) aus Kunststoff gefertigt ist.

17. Wischblatt nach einem der vorhergehenden Ansprüche,
**dadurch gekennzeichnet, daß** das wenigstens eine Abdeckprofil (13, 14, 14a) aus eine elastischen Material gefertigt ist.

## Claims

1. Wiper blade for cleaning windscreens on vehicles, in particular motor vehicles, comprising an elongate wiper blade body (2) which is made from a rubber elastic material and can be placed against the respective windscreen, said wiper blade body being provided on its two longitudinal sides with longitudinal grooves (10) which are located opposite one another and in which in each case a preferably resilient support rail (3) engages with part of its width, said support rail extending in the longitudinal direction (L) of the wiper blade body (2), wherein each support rail (3) protrudes beyond the respective longitudinal side (8, 9) with a further part of its width, wherein, placed and fixed on the protruding part of at least one support rail (3) is a cover profile (13, 14, 14a) which covers this support rail (3), **characterized in that** at least one channel (22, 23) for a cleaning or washing fluid is provided in at least one cover profile (13, 14, 14a), said channel extending in the longitudinal direction (L) of the wiper blade.

2. Wiper blade according to Claim 1, **characterized in that** the at least one cover profile (13) is provided on a front side of the wiper blade (1, 1a) with respect to the direction of travel of a vehicle.

3. Wiper blade according to Claim 1 or 2, **characterized in that** in each case a cover profile (13, 14, 14a) is placed on the protruding parts of the two support rails (10).

4. Wiper blade according to any of the preceding claims, **characterized in that** the cover profile (13, 14, 14a) covers the protruding part of the respective support rail (3) along the entire length.

5. Wiper blade according to any of the preceding claims, **characterized in that** the at least one cover profile (13, 14, 14a) tightly adjoins the adjacent longitudinal side (8, 9) of the wiper blade body (2).

6. Wiper blade according to any of the preceding claims, **characterized in that** the at least one cover profile (13) is held on the associated support rail (3) by catches (17, 18).

7. Wiper blade according to any of the preceding claims, **characterized in that** the at least one cover profile (13, 14, 14a) has a longitudinal groove (15, 16), by means of which it is placed on the protruding part of the at least one support rail (3) such that it engages over the latter in a clamping manner.

8. Wiper blade according to Claim 7, **characterized in that** provided in the longitudinal groove (15, 16) is at least one latching element (17) which cooperates with a mating notch (18) on the respective support rail (3).

9. Wiper blade according to any of the preceding claims, **characterized in that** at least one nozzle orifice (24, 25) for applying the cleaning or washing fluid to a windscreen opens into the channel (22, 23).

10. Wiper blade according to any of the preceding claims, **characterized by** at least one connection (11) for connecting the channel (22, 23) to a source for the cleaning or washing fluid.

11. Wiper blade according to any of the preceding claims, **characterized in that** the at least one cover profile (13, 14a) has a strip-like projection (13') or a strip-like face (14a') which protrudes beyond the underside of the remaining part of the cover profile (13, 14a).

12. Wiper blade according to any of the preceding claims, **characterized in that** the at least one cover profile (13), preferably the cover profile (13) on the front side of the wiper blade (1, 1a) with respect to the direction of travel of a vehicle, is designed as a spoiler or is provided with a first spoiler surface (19) on an outer surface extending in the longitudinal direction (L) of the wiper blade.

13. Wiper blade according to Claim 12, **characterized in that** the at least one cover profile (13) is provided with a first spoiler surface (19) on its projection (13').

14. Wiper blade according to any of the preceding claims, **characterized in that** the wiper blade body (2) is designed as a spoiler or is provided with a second spoiler surface (12) on an upper side.

15. Wiper blade according to any of the preceding claims, **characterized in that** at least one cover profile (13) has a surface (21) which adjoins the second spoiler surface (12) and thus widens the second spoiler surface (12).

16. Wiper blade according to any of the preceding claims, **characterized in that** the at least one cover profile (13, 14, 14a) is made of plastic.

17. Wiper blade according to any of the preceding claims, **characterized in that** the at least one cover profile (13, 14, 14a) is made from an elastic material.

## Revendications

1. Balai d'essuie-glace pour le nettoyage de vitres de véhicule, en particulier de véhicules automobiles, comportant une lame d'essuie-glace (2) s'étendant longitudinalement pouvant reposer sur la vitre concernée, qui est composée d'un matériau élastique en caoutchouc, et qui est munie sur ses deux faces latérales opposées l'une à l'autre de rainures longitudinales (10) dans chacune desquelles s'engage, par une partie de sa largeur, un rail de support de préférence flexible s'étendant dans le sens de la longueur (L) de la lame d'essuie-glace (2), chaque rail de support (3) s'étendant par une autre partie de sa largeur au-delà de la face longitudinale (8, 9) concernée, un profilé de protection (3, 14, 14a) étant placé et fixé sur la partie qui dépasse d'au moins un rail de support (3) et protégeant ce rail de support (3), **caractérisé en ce que** dans au moins un profilé de protection (13, 14, 14a) est prévu au moins un canal (22, 23) s'étendant dans le sens de la longueur (L) du balai d'essuie-glace pour un liquide de nettoyage ou de lavage.

2. Balai d'essuie-glace selon la revendication 1, **caractérisé en ce que** le au moins un profilé de protection (13) est prévu sur une face avant du balai d'essuie-glace (1, 1a) par rapport au sens de la marche d'un véhicule.

3. Balai d'essuie-glace selon la revendication 1 ou 2, **caractérisé en ce qu'**un profilé de protection (13, 14, 14a) est monté sur la partie des deux rails de support (10) qui dépasse.

4. Balai d'essuie-glace selon une des revendications précédentes, **caractérisé en ce que** le profilé de protection (13, 14, 14a) couvre sur toute sa longueur la partie de chaque rail de support (3) qui dépasse.

5. Balai d'essuie-glace selon une des revendications précédentes, **caractérisé en ce qu'**au moins un profilé de protection (3, 14, 14a) est raccordé de manière étanche à la face longitudinale (8, 9) adjacente de la lame d'essuie-glace (2).

6. Balai d'essuie-glace selon une des revendications précédentes, **caractérisé en ce qu'**au moins un profilé de protection (13) est maintenu par encliquetage (17, 18) sur le rail de support (3) concerné.

7. Balai d'essuie-glace selon une des revendications précédentes, **caractérisé en ce qu'**au moins un profilé de protection (13, 14, 14a) présente une rainure longitudinale (15, 16) par laquelle il est monté sur la partie du au moins un rail de support (3) qui dépasse, qu'il enserre à la manière d'une mâchoire.

8. Balai d'essuie-glace selon la revendication 7, **caractérisé en ce que** dans la rainure longitudinale (15, 16) est prévu au moins un élément formant un cran (17) qui interagit avec un cran antagoniste (18) prévu sur chaque rail de support (13).

9. Balai d'essuie-glace selon une des revendications précédentes, **caractérisé en ce que** dans le canal (22, 23) débouche au moins une ouverture de projection (24, 25) pour l'application du liquide de nettoyage ou de lavage sur une vitre.

10. Balai d'essuie-glace selon une des revendications précédentes, **caractérisé par** au moins un raccordement (11) pour le raccordement du canal (22, 23) à une source pour le liquide de nettoyage ou de lavage.

11. Balai d'essuie-glace selon une des revendications précédentes, **caractérisé en ce** le moins un profilé de protection (13, 14a) présente une proéminence (13') en forme de bande ou un pan (14a') en forme de bande, qui dépasse au-delà de la face inférieure de la partie restante du profilé de protection (13, 14a).

12. Balai d'essuie-glace selon une des revendications précédentes, **caractérisé en ce que** le au moins un profilé de protection (13), de préférence le profilé de protection (13) se trouvant sur la face avant du balai d'essuie-glace (1, 1a) par rapport au sens de la marche du véhicule, est conçu sous la forme d'un spoiler sur une surface extérieure s'étendant dans le sens de la longueur (L) du balai d'essuie-glace et/ou est muni d'une première surface de spoiler (19).

13. Balai d'essuie-glace selon la revendication 12, **caractérisé en ce que** le au moins un profilé de protection (13) est muni d'une première surface de spoiler (19) sur sa proéminence (13').

14. Balai d'essuie-glace selon une des revendications précédentes, **caractérisé en ce que** la lame d'essuie-glace (2) est conçue sous la forme d'un spoiler sur une face supérieure et/ou est munie d'une deuxième surface de spoiler (12).

15. Balai d'essuie-glace selon une des revendications précédentes, **caractérisé en ce qu'**au moins un profilé de protection (13) présente une surface (21) qui prolonge la deuxième surface de spoiler (12) et produit ainsi un élargissement de la deuxième surface de spoiler (12).

16. Balai d'essuie-glace selon une des revendications précédentes, **caractérisé en ce que** le au moins un profilé de protection (13, 14, 14a) est fabriqué à partir d'une matière plastique.

17. Balai d'essuie-glace selon une des revendications précédentes, **caractérisé en ce que** le au moins un profilé de protection (13, 14, 14a) est fabriqué à partir d'un matériau élastique.
